# EUROPÄISCHE PATENTANMELDUNG

(11) **EP 3 683 946 A1**
(43) Veröffentlichungstag der Anmeldung: **22.07.2020**
(21) Anmeldenummer: 19151792.9
(22) Anmeldetag: 15.01.2019
(51) Int. Cl.: H02M 3/337, H02M 3/335, H02M 7/5387, H02M 1/00

(54) **RESONANZWANDLER UND VERFAHREN ZUM BETRIEB EINES RESONANZWANDLERS**

(71) Anmelder: Siemens Aktiengesellschaft, 80333 München (DE)
(72) Erfinder: Komma, Thomas, 85521 Ottobrunn (DE)

(57) **Zusammenfassung**

Die Erfindung gibt einen Resonanzwandler an, aufweisend eine Wechselrichterschaltung (1) mit mehreren Schaltern, die derart geschaltet sind, dass die Spannung (U₀) am Ausgang der Wechselrichterschaltung (1) ein vorgebbares Tastverhältnis (T_{V}) aufweist, wobei das Tastverhältnis (T_{V}) größer gleich 35 % und kleiner gleich 42 % ist.

Die Erfindung gibt auch ein entsprechendes Verfahren zum Betrieb eines Resonanzwandlers an.

## Beschreibung

### Gebiet der Erfindung

Die Erfindung betrifft einen Resonanzwandler mit einer Wechselrichterschaltung mit mehreren Schaltern, die so geschaltet sind, dass die Spannung am Ausgang der Wechselrichterschaltung ein vorgebbares Tastverhältnis aufweist. Die Erfindung betrifft auch ein zugehöriges Verfahren zum Betrieb eines Resonanzwandlers.

### Hintergrund der Erfindung

An den Knotenpunkten zwischen der Wechselrichterschaltung und der Resonanzkreisschaltung eines Resonanzwandlers liegt in den bekannten Topologien eine rechteckförmige Spannung, deren Oberschwingungen zu Verletzungen gültiger EMV-Normen führen können.

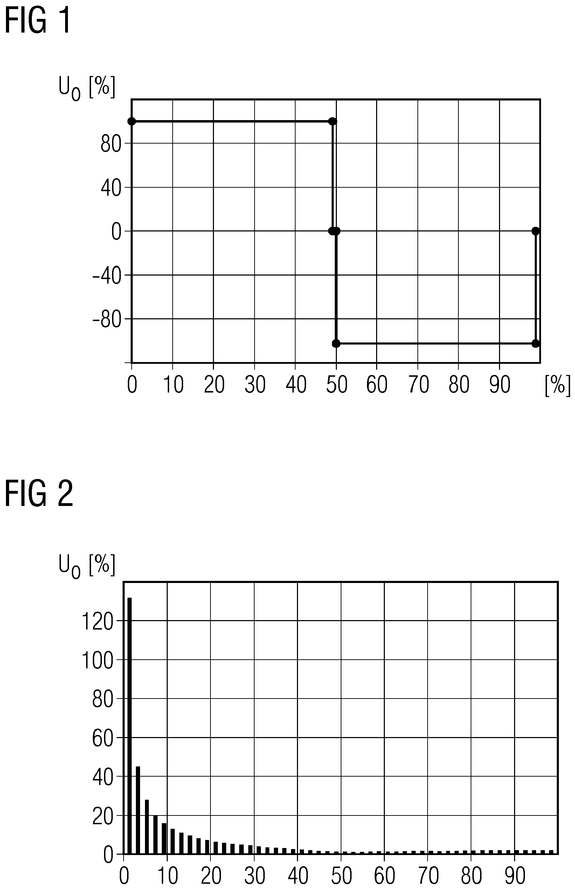

Resonanzwandler werden in der Regel mit einer rechteckförmigen Spannung mit einem Tastverhältnis (auch als Tastgrad bezeichnet) von rund 50 % abzüglich notwendiger Totzeiten angesteuert, d.h. dass nahezu während 100 % einer halben Periodendauer Spannung an den Knotenpunkten liegt. **Fig. 1** zeigt die Ausgangsspannung U₀ einer Wechselrichterschaltung mit einer Vollbrückenschaltung eines DC/DC-Resonanzwandlers mit einem Tastverhältnis T_{V} = 49 % und einer Amplitude von 100 % der Zwischenkreisspannung.

Mit der rechteckförmigen Spannung U₀ wird eine Resonanzkreisschaltung angeregt, die dann einen Strom hervorruft, der aufgrund dieser Anregung oberschwingungsbehaftet ist. Insbesondere bei Anwendungen, die einen großen offenen Luftspalt des Transformators bedingen, kommt es aufgrund der stark oberschwingungsbehafteten Anregungsspannung und dem resultierenden Strom zu teils erheblichen Überschreitungen der Grenzwerte der zulässigen E- und H-Feldstärken bei der Abstrahlung in der EMV-Prüfung.

**Fig. 2** zeigt ein Schaubild der Fourieranalyse des Signals U₀ in % mit 49 % Tastverhältnis T_{V} nach **Fig. 1****.** Auf der x-Achse sind die Harmonischen aufgetragen. Beispielsweise kommt es in dem vorgesehenen Frequenzbereich zwischen 81,5 kHz und 90 kHz beim induktiven Laden von Elektrofahrzeugen allein durch die 3. Harmonischen im Bereich zwischen 244.5 kHz und 270 kHz im Langwellen-Rundfunkbereich zu Überschreitungen der zulässigen Grenzwerte. Die anregende Spannungsamplitude U₀ ist hier mit 42.3 % der Zwischenkreisspannung nur mit erhöhtem Filteraufwand zu unterdrücken. Dies bedingt für diesen Frequenzbereich den Einsatz von großvolumigen passiven Bauelementen, die erheblich in die Kosten des Ladesystems eingehen.

Bisher wird bewusst oftmals eine Grenzwertüberschreitung in Kauf genommen, da die notwendigen Filter in Baugröße und Kosten das Gesamtsystem unrentabel machen würden.

Für Leistungsanwendungen ab 1 kW aufwärts, mit dem Ziel die Verlustleistungen bei den Schaltvorgängen in den Schalttransistoren zu minimieren, werden Resonanzwandler in zwei Varianten ausgeführt, die entweder immer nur im Nulldurchgang der Spannung oder immer nur im Nulldurchgang des Stroms geschaltet werden. Dabei bildet die leistungsübertragende Strecke inklusive des Transformators einen Schwingkreis mit zusätzlichen Kapazitäten und Induktivitäten, welcher die bei diesen Wandlern fixe Schaltfrequenz bestimmt.

In der Offenlegungsschrift DE 10 2014 202 954 A1 wird ein DC/DC-Resonanzwandler für einen Röntgengenerator beschrieben, bei dem die Ansteuerfrequenz und der Tastgrad der Wechselrichterspannung gleichzeitig und aufeinander abgestimmt geregelt wird.

### Zusammenfassung der Erfindung

Es ist Aufgabe der Erfindung, eine Lösung für einen Resonanzwandler anzugeben, bei der die elektromagnetische Verträglichkeit gegenüber dem Stand der Technik verbessert ist.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Ein Aspekt der Erfindung liegt in der Anwendung eines Pulsmusters, in das absichtlich längere Totzeiten eingebaut werden. Das Tastverhältnis liegt vorteilhaft im Bereich von 35 % bis 42 %. Nur in diesem Bereich ist die leistungstragende Amplitude der Grundschwingung gegenüber der bei 49 - 50 % Tastverhältnis nur unwesentlich abgesunken. Aufgrund der jedoch deutlich kleineren Amplituden der Harmonischen im unteren Bereich werden Anwendungen wie die induktive Energieübertragung über größere Luftspalte erst realisierbar. Das erforderliche Filter zur Erfüllung der EMV-Normen kommt dann in wirtschaftliche Größenordnungen.

Die Erfindung beansprucht einen Resonanzwandler aufweisend eine Wechselrichterschaltung mit mehreren Schaltern, die derart geschaltet sind, dass die Spannung am Ausgang der Wechselrichterschaltung ein vorgebbares Tastverhältnis aufweist, wobei das Tastverhältnis größer gleich 35 % und kleiner gleich 42 % ist.

Eine Wechselrichterschaltung (auch als Inverter bezeichnet) ist eine elektrische Schaltung, die Gleichstrom in Wechselstrom umwandelt. Wechselrichter bilden neben Gleichrichtern, Gleichspannungswandlern und Umrichtern eine Untergruppe der Stromrichter.

Ein Resonanzwandler kann auch als Gleichspannungswandler bezeichnet werden. Bevorzugt ist das Tastverhältnis 38 oder 39 %.

Die Erfindung bietet den Vorteil, dass ohne aufwendige Filterschaltungen die hinlänglichen EMV-Grenzwerte eingehalten werden können.

In einer Weiterbildung können die Schalter Halbleiterbauelemente sein.

In einer weiteren Ausgestaltung der Erfindung kann die Wechselrichterschaltung eine Vollbrückenschaltung aufweisen.

In einer weiteren Ausprägung ist der Wechselrichterschaltung eine Resonanzkreisschaltung nachgeschaltet.

In einer weiteren Ausprägung ist der Resonanzkreisschaltung ein Transformator nachgeschaltet.

In einer weiteren Ausprägung ist dem Transformator eine Gleichrichterschaltung nachgeschaltet.

Ein weiterer Aspekt der Erfindung liegt darin, ein Verfahren zum Betrieb eines Resonanzwandlers mit weniger Oberwellen anzugeben.

Die Erfindung beansprucht ein Verfahren zum Betrieb eines Resonanzwandlers, wobei die Schalter einer Wechselrichterschaltung derart geschaltet werden, dass die Spannung am Ausgang der Wechselrichterschaltung ein vorgebbares Tastverhältnis aufweist, wobei das Tastverhältnis größer gleich 35 % und kleiner gleich 42 % ist.

In einer Weiterbildung der Erfindung wird das Verfahren mit einem erfindungsgemäßen Resonanzwandler ausgeführt.

Weitere Besonderheiten und Vorteile der Erfindung werden aus den nachfolgenden Erläuterungen eines Ausführungsbeispiels anhand von schematischen Zeichnungen ersichtlich.

### Kurze Beschreibung der Zeichnungen

Es zeigen:
- Fig. 1: ein Schaublid der Ausgangsspannung einer Vollbrücke eines Resonanzwandlers gemäß Stand der Technik,
- Fig. 2: ein Schaublid einer Fourieranalyse des Signals des Resonanzschwingkreises gemäß Stand der Technik,
- Fig. 3: ein Blockschaltbild eines Resonanzwandlers,
- Fig. 4: ein Schaublid der Ausgangsspannung einer Vollbrücke eines Resonanzwandlers und
- Fig. 5: ein Schaublid einer Fourieranalyse des Signals des Resonanzschwingkreises.

### Detaillierte Beschreibung der Erfindung

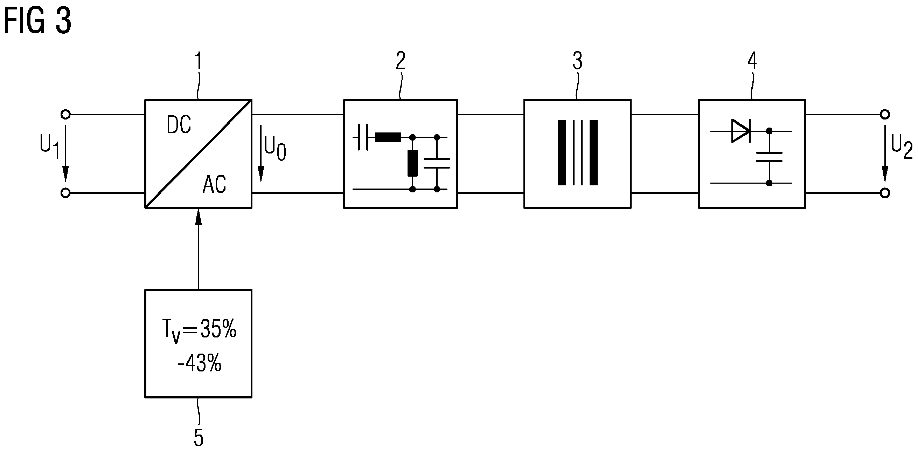

**Fig. 3** zeigt ein Blockschaltbild eines DC/DC-Resonanzwandlers mit dem eine DC Eingangsspannung U₁ in eine DC Ausgangsspannung U₂ gewandelt wird. Die Wechselrichterschaltung 1 wandelt die Gleichspannung U₁ am Eingang in eine rechteckförmige Wechselrichterspannung U₀ am Ausgang der Wechselrichterschaltung 1 um. Die Wechselrichterspannung U₀ wird der Resonanzkreisschaltung 2 zugeführt, deren Ausgangsspannung wird mit Hilfe des Transformators 3 transformiert und mittels der Gleichrichterschaltung 4 gleichgerichtet.

Mit Hilfe der Steuerschaltung 5 werden die Schalter der Wechselrichterschaltung 1 gesteuert und das Tastverhältnis T_{V} sowie die Frequenz der Wechselrichterspannung U₀ eingestellt. Vorzugsweise sind die Schalter als Vollbrücke mit Halbleiterschaltern ausgeführt. Es wird ein Tastverhältnis T_{V} der Vollbrücke im Bereich zwischen 35% und 42% realisiert.

Der Transformator 3 kann durch eine induktive Übertragungsstrecke gebildet werden, wie beispielsweise beim induktiven Laden einer Batterie als Last. Dabei befindet sich die Wechselrichterschaltung 1, die Resonanzkreisschaltung 2 und die Primärseite des Transformators 3 in einer Ladestation und die Sekundärseite des Transformators 3 sowie die Gleichrichterschaltung 4 in einem Endgerät, zum Beispiel in einem Fahrzeug.

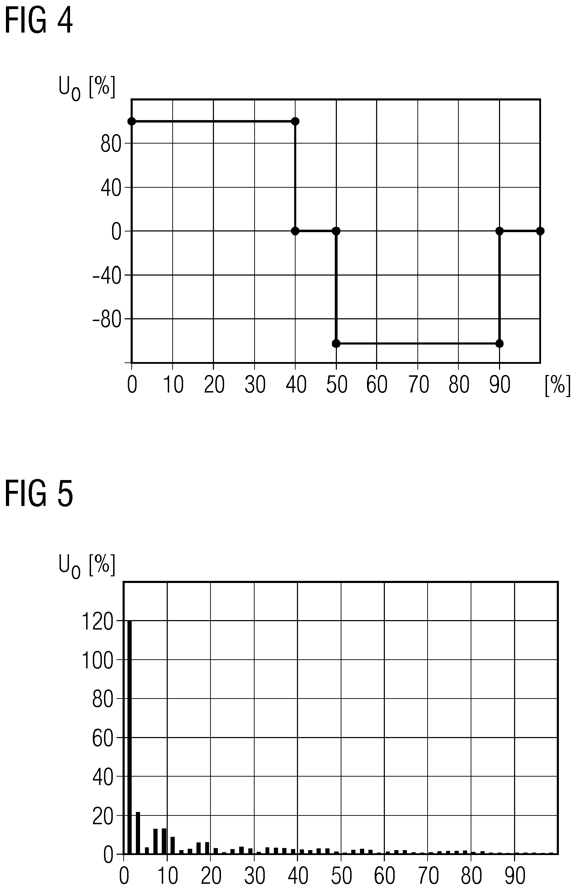

**Fig. 4** zeigt beispielhaft ein Schaubild der Wechselrichterspannung U₀ über der Periode in % einer Vollbrücke mit 39 % Tastverhältnis. Die Amplitude ist gleich 100 % der Zwischenkreisspannung.

**Fig. 5** zeigt ein Schaubild der Fourieranalyse des Signals U₀ in % mit 39 % Tastverhältnis T_{V} nach **Fig. 4****.** Die Amplitude der 3. Harmonischen beträgt jetzt nur noch rund 22 % der Zwischenkreisspannung gegenüber 42 % bei einem herkömmlichen Signal mit ca. 49 % Tastverhältnis T_{V}. Bei 38 % Tastverhältnis lässt sich die Amplitude der 3. Harmonischen auf unter 19 % der Zwischenkreisspannung reduzieren.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

### Bezugszeichenliste

- 1: Wechselrichterschaltung
- 2: Resonanzkreisschaltung
- 3: Transformator
- 4: Gleichrichterschaltung
- 5: Steuerschaltung

- U₀: Wechselrichterspannung
- U₁: Eingangsspannung
- U₂: Ausgangsspannung
- T_{V}: Tastverhältnis/Tastgrad

## Patentansprüche

1. Resonanzwandler aufweisend eine Wechselrichterschaltung (1) mit mehreren Schaltern, die derart geschaltet sind, dass die Spannung (U₀) am Ausgang der Wechselrichterschaltung (1) ein vorgebbares Tastverhältnis (T_{V}) aufweist,
**dadurch gekennzeichnet,**
**dass** das Tastverhältnis (T_{V}) größer gleich 35 % und kleiner gleich 42 % ist.

2. Resonanzwandler nach Anspruch 1,
**dadurch gekennzeichnet,**
**dass** die Schalter Halbleiterbauelemente sind.

3. Resonanzwandler nach Anspruch 1 oder 2,
**dadurch gekennzeichnet,**
**dass** die Wechselrichterschaltung (1) eine Vollbrückenschaltung aufweist.

4. Resonanzwandler nach einem der vorhergehenden Ansprüche,
**gekennzeichnet durch:**
- eine der Wechselrichterschaltung (1) nachgeschaltete Resonanzkreisschaltung (2).

5. Resonanzwandler nach Anspruch 4,
**gekennzeichnet durch:**
- einen der Resonanzkreisschaltung (2) nachgeschalteten Transformator (3).

6. Resonanzwandler nach Anspruch 5,
**gekennzeichnet durch:**
- eine dem Transformator (3) nachgeschaltete Gleichrichterschaltung (4).

7. Verfahren zum Betrieb eines Resonanzwandlers, wobei Schalter einer Wechselrichterschaltung (1) derart geschaltet werden, dass die Spannung (U₀) am Ausgang der Wechselrichterschaltung (1) ein vorgebbares Tastverhältnis (T_{V}) aufweist,
**dadurch gekennzeichnet,**
**dass** das Tastverhältnis (T_{V}) größer gleich 35 % und kleiner gleich 42 % ist.

8. Verfahren nach Anspruch 7 ausgeführt mit einem Resonanzwandler nach einem der Ansprüche 2 bis 6.
